# EUROPÄISCHE PATENTSCHRIFT

(11) **EP 3 118 588 B1**
(45) Veröffentlichungstag und Bekanntmachung des Hinweises auf die Patenterteilung: **21.11.2018**
(21) Anmeldenummer: 15176997.3
(22) Anmeldetag: 16.07.2015
(51) Int. Cl.: G01D 11/00, G01D 11/02, G01D 11/24, G01D 11/30, G01B 3/12, G01D 5/04

(54) **FEDERARM FÜR EIN MESSGERÄT MIT EINEM VERZAHNUNGSPROFIL**
SPRING ARM FOR A MEASURING INSTRUMENT WITH A TOOTHED PROFILE
BRAS DE RESSORT POUR UN APPAREIL DE MESURE DOTE D'UN PROFIL DENTE

(43) Veröffentlichungstag der Anmeldung: 18.01.2017
(73) Patentinhaber: Wachendorff Automation GmbH & Co. KG, 65366 Geisenheim (DE)
(72) Erfinder: Hanß, Tobias, 55413 Trechtingshausen (DE); Prause, Robert, 65375 Oestrich-Winkel (DE); Armbrüster, Mathias, 55545 Bad Kreuznach (DE)
(74) Vertreter: Tergau & Walkenhorst Patentanwälte PartGmbB

(56) Entgegenhaltungen:
- "Längenmesssystem LMSMA25", Wachendorff Automation GmbH, 9. Juli 2015 (2015-07-09), Seiten 1-5, XP055241795, Gefunden im Internet: URL:http://www.wachendorff-automation.de/f ileadmin/pim/WA/pdfs/de/LMSMA25_de.pdf [gefunden am 2016-01-15]
- "Längenmesssystem LMSMA35", Wachendorff Automation GmbH, 9. Juli 2015 (2015-07-09), Seiten 1-5, XP055241799, Gefunden im Internet: URL:http://www.wachendorff-automation.de/f ileadmin/pim/WA/pdfs/de/LMSMA35_de.pdf [gefunden am 2016-01-15]
- "Längenmesssystem LMSMA32", Wachendorff Automation GmbH, 9. Juli 2015 (2015-07-09), Seiten 1-5, XP055241798, Gefunden im Internet: URL:http://www.wachendorff-automation.de/f ileadmin/pim/WA/pdfs/de/LMSMA32_de.pdf [gefunden am 2016-01-15]
- "Sick Inkrementale Messrad-Encoder Montageanleitung DFV 60", , 6. Februar 2014 (2014-02-06), Seiten 1-2, XP055241564, Gefunden im Internet: URL:https://www.mysick.com/saqqara/im00359 36.pdf [gefunden am 2016-01-14]
- "Präzise Positionsbestimmung mit dem LMS MA", Wachendorff Automation GmbH, 17. Juli 2015 (2015-07-17), Seiten 1-8, XP055241773, Gefunden im Internet: URL:http://www.wachendorff-automation.de/f ileadmin/pim/WA/pdfs/de/Flyer_Laengenmesss ystem-LMSMA_de.pdf [gefunden am 2016-01-15]
- Wachendorf Automation GmbH: "LMS58 Robustes Längenmesssystemfür Strecke oder Geschwindigkeit LMS", Internet , 2 March 2015 (2015-03-02), Retrieved from the Internet: URL:https://web.archive.org/web/2015030201 0104/http://www.wachendorff-automation.de: 80/laengenmesssystem-drehgeber-digitalanze ige-federarm-messrad-lms58.html [retrieved on 2017-12-21]
- Wachendorff Automation GmbH: "LMS WDG Robustes Längenmesssystem LMS WDG Präzise Positionsbestimmung für Markiersysteme", Internet , 2 March 2015 (2015-03-02), Retrieved from the Internet: URL:https://web.archive.org/web/2015030203 0504/http://www.wachendorff-automation.de: 80/laengemesssystem-fuer-markiersysteme-lm swdg.html [retrieved on 2017-12-21]

## Beschreibung

Die Erfindung bezieht sich auf einen Federarm zur Aufnahme eines Messgerätes, insbesondere eines Drehgebers mit einem Messrad, mit einer Schwinge, deren eines Ende zur Aufnahme des Messgerätes ausgeformt ist und derem anderen Ende eine Gelenkeinheit zugeordnet ist, wobei die Gelenkeinheit eine ortsfeste Grundplatte und ein im Montage- bzw. Einstellmodus gegenüber der Grundplatte um eine Drehachse senkrecht zur Grundplatte drehbar gelagertes und an der Schwinge angeordnetes Lagergehäuse umfasst.

Federarme für Messgeräte kommen insbesondere dann zum Einsatz, wenn die Messgeräte auf einer sich bewegenden Oberfläche aufliegen müssen. Dabei können die Federarme insbesondere Schwingungen der Oberfläche abfangen und gleichzeitig einen gewünschten Anpressdruck erzeugen bzw. aufrechterhalten.

Derartige Messgeräte umfassen üblicherweise ein Messrad mit einer als zylindrische Mantelfläche ausgebildeten Lauffläche und einen Drehgeber, wobei die Geberwelle des Drehgebers drehwinkelgenau mit dem Messrad gekoppelt ist. Solche Messeinrichtungen werden zur Weg- und Geschwindigkeitsmessung von bewegten Objekten in Bezug auf ein vorzugsweise ortsfestes Bauteil, z. B. zur Messung des Weges und der Geschwindigkeit von Transportbändern eingesetzt. Das Messrad sitzt mit seiner Lauffläche auf dem zu messenden Objekt reibschlüssig auf, wobei die Drehachse des Messrades quer zur Bewegungsrichtung des Objektes, z. B. zur Laufrichtung des Transportbandes ausgerichtet ist. Durch die Bewegung des Objektes wird das Messrad und von diesem der Drehgeber angetrieben. Der Drehgeber und das Messrad sind an dem Bauteil, z. B. an einem Maschinengestell, gelagert. Um eine möglichst schlupffreie Messung zu erreichen, sind der Drehgeber und das Messrad üblicherweise senkrecht zur Oberfläche des Objektes, d. h. im Wesentlichen senkrecht zur Bewegungsrichtung des Objektes und senkrecht zur Achse des Messrades federnd an dem Bauteil gelagert. Durch die federnde Lagerung wird das Messrad gegen die sich bewegende Oberfläche des zu messenden Objektes gedrückt, um einen für eine möglichst schlupffreie Messung erforderlichen Reibschluss zu erzeugen.
Zum Einstellen des Anpressdruckes des Messrads gegen die sich bewegende Oberfläche des zu messenden Objektes, ist der Federarm üblicherweise über ein Gelenk an einem ortsfesten Bauteil angebracht. Über dieses Gelenk kann der Federarm und somit auch das Messrad in Richtung der Oberfläche des zu messenden Objektes gedreht werden und auf diese gedrückt werden. Nachteilig an den bisherigen Ausführungen der Federarmgelenke ist allerdings, dass eine Einstellung eines gewünschten Anpressdruckes bislang kaum bzw. nur sehr umständlich möglich war. Üblicherweise musste bei den bislang verwendeten Gelenken der Anpressdruck nach Einstellung des Federarms bestimmt werden. Dies führte dazu, dass im Falle eines zu hohen oder zu niedrigen Anpressdruckes der Federarm wieder gelöst und neu eingestellt werden musste. Zusätzlich besteht bei gängigen Federarmgelenken die Gefahr, dass der Anpressdruck ursächlich für eine Verstellung des Federarms gegenüber den Ortsfesten Bauelementen ist, da das Gelenk den Anpressdruck nicht standhalten kann.

Das Dokument "Sick Inkrementale Messrad-Encoder Montageanleitung DFV 60" zeigt eine, Lösung aus dem Stand der Technik.

Der Erfindung liegt daher die Aufgabe zugrunde, einen Federarm für ein Messgerät, insbesondere einen Drehgeber mit einem Messrad, der oben genannten Art anzugeben, der eine besonders leichte und einfache Einstellung eines gewünschten Anpressdruckes des Messgerätes auf dem zu messenden Objekt ermöglicht und gleichzeitig ein Verdrehen des Gelenks in Folge eines zu hohen Anpressdruckes verhindert.
Diese Aufgabe wird erfindungsgemäß gelöst, indem die Grundplatte und das Lagergehäuse an den jeweils zueinander ausgerichteten Stirnflächen der Grundplatte bzw. des Lagergehäuses in zumindest einem Abschnitt ein Verzahnungsprofil aufweisen.
Vorteilhafte Ausgestaltungen der Erfindung sind Gegenstand der Unteransprüche.

Die Erfindung geht von der Überlegung aus, dass eine besonders einfache und leichte Einstellung eines Anpressdruckes über eine Verstellung des Federarms gegenüber dem zu messenden Objekt dann erreicht werden kann, wenn bereits während der Einstellung der resultierende Anpressdruck bekannt ist. Es wurde dabei festgestellt, dass für eine möglichst genaue Einstellung des Anpressdruckes insbesondere dann möglich ist, wenn der Federarm in bestimmten Intervallschritten verdreht wird und jedem einzelnen Intervallschritt eine vorher bekannte Erhöhung des Anpressdruckes zugewiesen werden kann. Um derartige Intervallschritte bei der Verstellung in der Gelenkeinheit zu ermöglichen, weist die Grundplatte und das Lagergehäuse ein Verzahnungsprofil auf, die im Betrieb des Messgerätes ineinandergreifen. Über die definierten Bergkämme und Täler der Verzahnungsprofile kann so die Ausrichtung des Federarms in vorher festgelegten Intervallen verändert werden, wobei jedem Intervall eine vorher bekannte Erhöhung des Anpressdruckes zugeordnet werden kann.

Zusätzlich sorgt das Ineinandergreifen der Verzahnungsprofile für eine formschlüssige Verbindung der Grundplatte und des Lagergehäuses. Um ein Verdrehen der Grundplatte und des Lagergehäuses aufgrund eines zu hohen Anpressdruckes zu verhindern, sind in bevorzugter Ausführung die Bergkämme und dementsprechend auch die Täler der Verzahnungsprofile von der Drehachse aus gesehen radial auf den Stirnflächen der Grundplatte und des Lagergehäuses angeordnet.

Für eine möglichst einfache Einstellung des Anpressdruckes sind in vorteilhafter Ausführung die Verzahnungsprofile im Randbereich der Stirnflächen angeordnet. Dadurch ist es möglich während der Einstellung des Federarms direkt an der von außen sichtbaren Verzahnung den eingestellten Anpressdruck zu erkennen, welche Bergkämme in welchen Tälern einrasten. Dies ermöglicht eine schnelle und insbesondere wiederholbare Einstellung des gewünschten Anpressdruckes.

Um einerseits ein Verkeilen der Verzahnungsprofile bei der Einstellung des Anpressdruckes zu verhindern und andererseits ein sanftes Einrasten in die eingestellte Position zu ermöglichen, sind in besonders bevorzugter Ausführung die Bergkämme und/oder Täler der Verzahnungsprofile zumindest teilweise abgerundet.

Die Einstellung des Anpressdruckes geschieht durch lösen der formschlüssigen Verbindung der Verzahnungsprofile und anschließender Drehung des Lagergehäuses relativ zur ortsfesten Grundplatte. Bei einer manuellen Einstellung des Anpressdruckes wird das Lagergehäuse dabei umgriffen und so gegenüber der Grundplatte verdreht. Zur Erhöhung des Reibungswiderstandes und somit zur besseren Kraftübertragung, umfasst in vorteilhafter Ausführung das Lagergehäuse an der Manteloberfläche Ausformungen, die parallel zur Drehachse angeordnet sind. Diese Ausformungen können beispielsweise als Längsstreben ausgeführt sein und ermöglichen, dass das Lagergehäuse sicher umgriffen werden kann. Zusätzlich können die Längsstreben als optische Markierungen dienen, um in Kombination mit dem Verzahnungsprofil der Grundplatte oder auch zusätzlichen Markierungen an der Oberfläche der Grundplatte eine gewünschte und vorher bekannte Einstellung schnell zu erreichen.

Um eine Verschiebung der Grundplatte und des Lagergehäuses bei der Einstellung zu verhindern und die Drehbewegung zu führen und zu unterstützen, umfasst in besonders bevorzugter Ausgestaltung die Stirnfläche der Grundplatte eine Führungsausformung und die Stirnfläche des Lagergehäuses eine entsprechende Führungsnut. Diese Führungsausformung ist dabei bevorzugt derart ausgebildet, dass sie auch dann noch in der Führungsnut liegt, wenn Verzahnungsprofile bereits nicht mehr ineinandergreifen.

Damit unteranderem das Messgerät von dem zu messenden Objekt gelöst werden kann, ohne aber die Einstellung des Anpressdruckes über die Gelenkeinheit zu ändern, ist in vorteilhafter Ausführung die Schwinge gegenüber dem Lagergehäuse drehbar gelagert. Diese Auslenkung des Messgerätes kann dabei in bevorzugter Ausführung mittels eines Rastbolzen fixiert werden, um zum Beispiel Wartungsarbeiten am zu messenden Objekt oder am Messgerät vornehmen zu können, ohne dass die Schwinge während der Wartungszeit durch einen Arbeiter gehalten werden muss. Um eine Rückführung des Messgerätes in die Betriebsposition zu erleichtern und um Schwingungen durch das zu messende Objekt ausgleichen zu können, ist die Schwinge in besonders bevorzugter Ausführung gegenüber dem Lagergehäuse mittels eines Federelements federnd gelagert.

Die mit der Erfindung erzielten Vorteile bestehen insbesondere darin, dass durch das Verzahnungsprofil eine intervallartige Einstellung des Anpressdruckes möglich ist. In Abhängigkeit der Anzahl der Bergkämme und Täler, also in Abhängigkeit des verwendeten Verzahnungsprofils, kann die Größe der Intervalle vorher festgelegt werden. Im Rahmen der Nutzung eines solchen Federelements kann die Erhöhung des Anpressdruckes pro Intervallschritt genau bestimmt werden, so dass bereits bei der Einstellung bekannt ist, um wie viel der Anpressdruck durch Verdrehen des Federarms erhöht wird. Eine Messung des Anpressdruckes im Betrieb des Federarms bzw. nach der Einstellung ist nicht mehr notwendig.

Ein Ausführungsbeispiel der Erfindung wird anhand einer Zeichnung näher erläutert. Darin zeigen:
- Fig. 1: einen Federarm für ein Messgerät
- Fig. 2: einen Federarm für ein Messgerät in demontierter Ausführung
- Fig. 3: einen Querschnitt durch die Gelenkeinheit eines
- Fig. 4: einen Querschnitt durch die Gelenkeinheit eines Federarms mit einem Rastbolzen
- Fig. 5: eine Sicherheitsvorrichtung für den Rastbolzen

Gleiche Teile sind in allen Figuren mit denselben Bezugszeichen versehen.

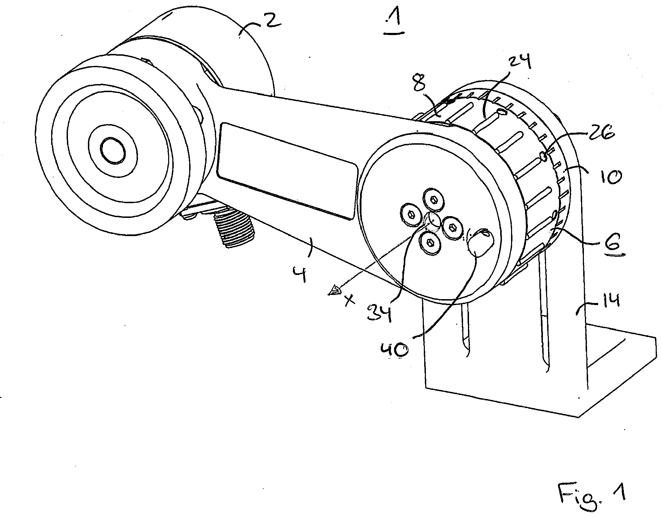

In Fig. 1 ist ein Federarm 1 für ein Messgerät 2 dargestellt. Der Federarm 1 umfasst dabei eine Schwinge 4, an deren einen Ende das Messgerät 2 angeordnet ist. Das Messgerät 2 ist in der Fig. 1 als Drehgeber mit einem Messrad ausgeführt und kann somit die Geschwindigkeit und auch Position eines nicht dargestellten und am Messrad vorbeigeführten und zu messenden Materials bestimmen. Die vorliegende Ausführung eines Federarms 1 mit einem Drehgeber kann daher insbesondere in Holz-, Stahl- und Blechbearbeitungsmaschinen, Sortieranlagen, Druck- und Papiermaschinen und allgemein in Zusammenhang mit Transportbändern zum Einsatz kommen.

Am anderen Ende der Schwinge 4 ist eine Gelenkeinheit 6 zur Befestigung und Ausrichtung der Schwinge 4 angeordnet, die ein Lagergehäuse 8 und eine Grundplatte 10 umfasst. Das Lagergehäuse 8 ist dabei im Wesentlichen zylindrisch ausgeführt und definiert über die Symmetrieachse eine Drehachse x in der Gelenkeinheit 6. Die Gelenkeinheit 6 ist dabei derart an der Schwinge 4 angeordnet, dass die Schwinge 4 gegenüber der Gelenkeinheit 6 und insbesondere gegenüber dem Lagergehäuse 8 um die Drehachse x drehbar gelagert ist. Dies wird durch ein entsprechendes Lagerelement 44 in Form eines Gleitlagers erzielt, das mit dem Lagergehäuse 8 verschraubt und als Gleitlagerung für eine Federarmachse 46 vorgesehen ist. Das Lagerelement 44 ist im Ausführungsbeispiel aus Messing, kann aber auch aus anderen geeigneten Materialien hergestellt sein. Die Federarmachse 46 läuft in der Gleitlagerung des Lagerelements 44 und ist mittels Schrauben mit der Schwinge 4 verbunden. An der Federarmachse 46 ist ein Federelement 12 angeordnet, das im Ausführungsbeispiel nach der Fig. 1 in Form einer Schenkelfeder ausgeführt ist. Diese Schenkelfeder ist dabei derart im Lagergehäuse 8 positioniert und mit der Schwinge 4 verbunden, dass aufgrund der Federkraft eine Ruhelage der Schwinge gegenüber dem Lagergehäuse 8 erzielt wird. Bei einer Auslenkung aus dieser Ruhelage, d.h. eine Drehung der Schwinge 4 gegenüber dem Lagergehäuse 8 um die Drehachse x erzeugt das Federelement 12 eine Rückstellkraft, die versucht die Schwinge 4 in die Ruhelage zu überführen. Liegt im Betrieb des Federarms 1 mit einem Messgerät 2, insbesondere einem Drehgeber mit einem Messrad, das Messgerät 2 bei Auslenkung der Schwinge 4 aus der Ruhelage auf dem zu messenden Material auf, sodass die Schwinge 4 dadurch nicht in die Ruhelage überführt werden kann, erzeugt die Rückstellkraft des Federelements 12 in eine entsprechende Anpresskraft des Messgeräts 2 auf dem zu messenden Material.

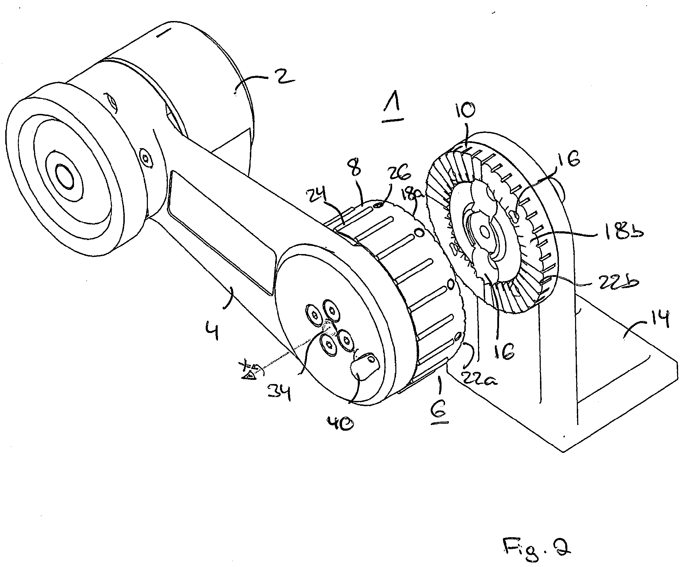

Das Lagergehäuse 8 und die Grundplatte 10 der Gelenkeinheit 6 sind ebenfalls derart angeordnet, dass sie während der Montage oder Einstellung des Messgerätes 2 um die Drehachse x gegeneinander verdreht werden können. Wie der Fig. 2 deutlicher zu entnehmen ist, wird die Grundplatte 10 dabei in einem vorgelagerten Arbeitsschritt ortsfest an einen Montagewinkel 14 montiert. Neben einem Montagewinkel 14 sind auch weitere Befestigungsmittel denkbar, wie auch die Montage der Grundplatte direkt an einer Wand, einem Träger oder einem Rahmen der Maschinenanlage oder des Gebäudes, in dem sich die Messeinrichtung befindet. Dazu umfasst die Grundplatte 10 eine Anzahl von Bohrungen 16, durch die die Grundplatte 10 von beiden Seiten mit Senkkopfschrauben 28 an dem Montagewinkel 14 befestigt werden kann. Die Grundplatte 10 kann in dem vorliegenden Ausführungsbeispiel komplett von der Gelenkeinheit 6 getrennt werden, sodass eine Montage der Grundplatte wesentlich vereinfacht wird.

Die der Schwinge 4 abgewandte Stirnfläche 18a des im Wesentlichen zylinderförmigen Lagergehäuses 8 ist bei der Montage bzw. Einstellung des Messgerätes der Stirnfläche 18b der Grundplatte 10 zugewandt. Das Lagergehäuse 8 und die Grundplatte 10 werden im Rahmen der Montage oder Einstellung des Federarms 1 mittels einer im Lagergehäuse 8 angeordneten Anzugsschraube 20 miteinander verbunden. Sowohl die Stirnfläche 18a des Lagergehäuses 8, als auch die Stirnfläche 18b der Grundplatte 10 umfassen in einem Randbereich ein Verzahnungsprofil 22a,b. Diese Verzahnungsprofile 22a,b sind dabei derart ausgeführt, dass bei einem Anziehen der Anzugsschraube 20, die Verzahnungsprofile 22a,b formschlüssig ineinandergreifen und eine relative Drehbewegung des Lagergehäuses 8 und der Grundplatte 10 um die Drehachse x verhindern. Die Bergkämme der Verzahnungsprofile 22a,b sind im Ausführungsbeispiel von der Drehachse x aus radial angeordnet, sodass beim Anziehen der Anzugsschraube 20 eine Selbstausrichtung ermöglicht wird, indem die Bergkämme des einen Verzahnungsprofils 22a,b, in die zugehörigen Täler des gegenüberliegenden Verzahnungsprofils 22a,b eingreifen. Die Bergkämme und die Täler der Verzahnungsprofile 22a,b sind im Ausführungsbeispiel abgerundet ausgeführt, sodass ein Verkeilen und somit auch eine Beschädigung der Verzahnungsprofile 22a,b vermieden wird.

Im Rahmen der Montage und Einstellung des Federarms 1 bzw. des Messgerätes 2 auf dem zu prüfenden Material wird das Lagergehäuse 8 um die Drehachse x so lange verdreht, bis das Messgerät 2 auf dem zu prüfenden Material aufsetzt. Ein weiteres Drehen des Lagergehäuses 8, spannt das Federelement 12 im inneren des Lagergehäuses vor und erzeugt wie oben bereits dargestellt einen Anpressdruck des Messgerätes 2 auf dem zu prüfenden Material. Um einen gewünschten Anpressdruck möglichst genau und variabel einstellen zu können, ist die Verzahnung möglichst fein. Im Ausführungsbeispiel nach der Fig. 2 sind dabei 36 Bergkämme und Täler vorgesehen, sodass der Federarm 1 in 10°-Schritten eingestellt werden kann. Dies entspricht in der vorliegenden Ausführung einem Anpressdruck von etwa 5 N pro 10°. Nach dem Einstellen des gewünschten Anpressdrucks wird die Anzugsschraube 20 festgezogen und das Lagergehäuse 8 verdrehsicher mit der Grundplatte 10 verbunden.

Zum vereinfachten Einstellen des Lagergehäuses 8 und zur Vorspannung des Federelements 12 umfasst das Lagergehäuse Ausformungen in Form von Längsstreben 24, die an der Manteloberfläche angeordnet sind und parallel zur Drehachse x verlaufen. Diese Längsstreben dienen dazu die Reibung- bzw. die Griffigkeit des Lagergehäuses 8 beim manuellen Einstellen zu erhöhen. Weiterhin können diese Längsstreben 24 in Kombination mit entsprechenden Markierungen auf der Umfangsfläche der Grundplatte 10 als Markierungspunkte verwendet werden, um eine bestimmte Einstellung auch nach dem Lösen der Anzugsschraube schnell wieder zu finden. Sollte die manuelle Kraft zur Einstellung des gewünschten Anpressdruckes nicht ausreichen das Lagergehäuse 8 entsprechend zu verdrehen, kann in dafür vorgesehene Aussparungen 26 ein nicht dargestelltes Hebelelement eingesetzt werden, um die ausgeübte Kraft so weiter zu erhöhen.

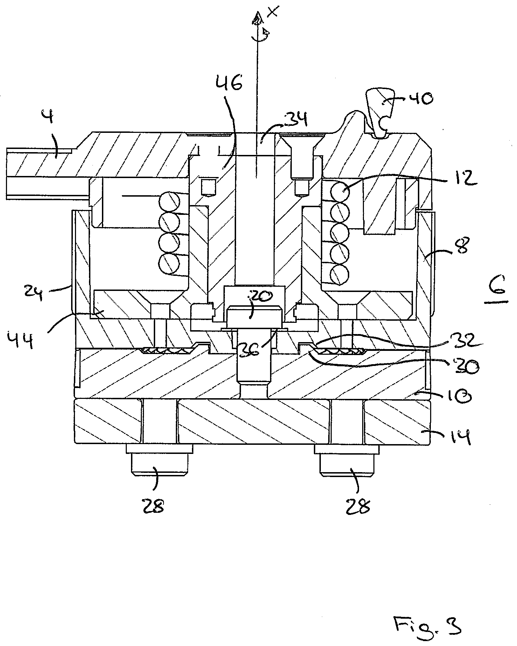

Die Fig. 3 zeigt einen Querschnitt durch eine solche Gelenkeinheit 6 in montierter Ausführung. Die Grundplatte 10 ist mittels Schrauben 28 an einem Montagewinkel 14 verdrehsicher befestigt. Das Lagergehäuse 8 ist über eine Anzugsschraube 20, die in der Drehachse x der Gelenkeinheit 6 liegt, mit der Grundplatte 10 verbunden. Aufgrund der Verzahnungsprofile 22a,b in den Stirnflächen 18a,b der Grundplatte 10 und des Lagergehäuses 8 ist das Lagergehäuse 8 im montierten Zustand ebenfalls verdrehsicher an der Grundplatte 10 und somit auch am Montagewinkel 14 befestigt. Für eine bessere und einfache Montage umfasst die Grundplatte 10 neben dem Verzahnungsprofil 22b auch eine kreisförmige und um die Drehachse x verlaufende Führungsausformung 30, die in einer zugeordneten Führungsnut 32 der Stirnfläche 18a des Lagergehäuses 8 liegt. Dadurch wird bei der Montage oder Einstellung des Federarms 1 eine Verschiebung des Lagergehäuses 8 quer zur Grundplatte 10 verhindert und eine Verdrehung des Lagergehäuses 8 stabilisiert und geführt.

Die Anzugsschraube 20 kann von außen mittels eines entsprechenden Werkzeuges gelöst und angezogen werden. Dabei wird das Werkzeug durch einen Führungsschacht 34 geführt, um die Anzugsschraube 20 zu erreichen. Durch entsprechende Ausformungen im Führungsschacht 34 der Anzugsschraube 20 ist diese im Lagergehäuse 8 derart angeordnet, dass sie auch beim Lösen des Lagergehäuses 8 von der Grundplatte 10 nicht aus dem Lagergehäuse 8 fallen kann. Dies wird durch eine entsprechende Ausbildung des Lagerelements 44 und der Federarmachse 46 erreicht. Im Lagergehäuse 8 ist weiterhin eine Andrückfeder 36 vorgesehen, die dazu dient, die Stirnflächen 18a,b des Lagergehäuses 8 und der Grundplatte 10 auch mit einer leicht gelösten Anzugsschraube 20 aneinanderzudrücken, sodass beim Einstellen des Anpressdruckes über ein Verdrehen des Lagergehäuses das Weiterstellen um eine Verzahnung fühlbar ist, da die Bergkämme der Verzahnung durch die Federkraft in die Täler gedrückt werden. Hierbei ist es von Vorteil, dass die Verzahnungsprofile 22a,b abgerundet ausgeführt sind, da diese eine bessere und leichtere Einstellbarkeit des Federarms 1 bei nur teilweise gelöster Anzugsschraube 20 ermöglichen, wenn bei einem manuellen Verdrehen des Lagergehäuses 8 die Kraft der Andrückfeder 36 überwunden werden muss. Durch die abgerundeten Verzahnungsprofile 22a,b wird zudem ein sanfteres Einrasten in der neuen Position erzielt.

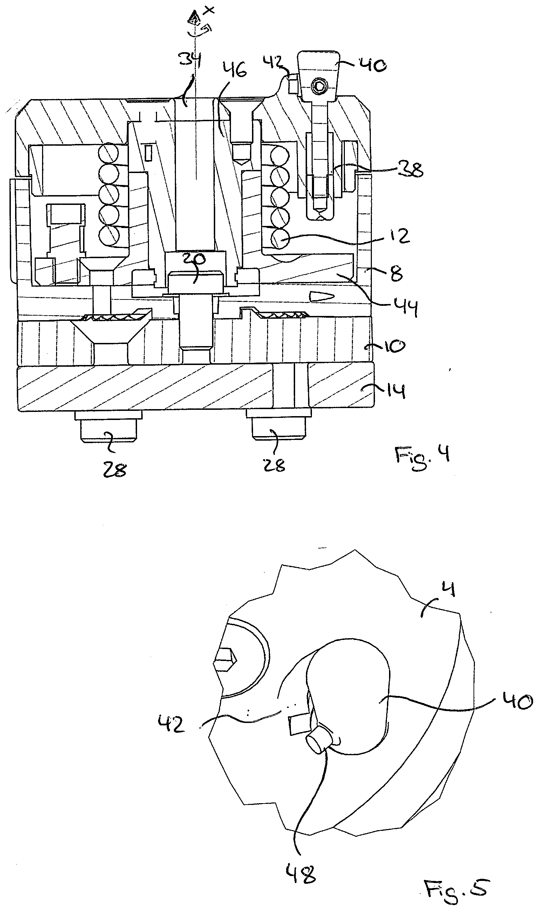

Wie im Ausführungsbeispiel nach Fig. 4 dargestellt umfasst das Lagergehäuse 8 weiterhin eine Führung für einen Rastbolzen 38, in die ein Rastbolzen 40 eingeführt werden kann, um die Schwinge 4 gegenüber einer Verdrehung zum Lagergehäuse 8 zu sichern. Dadurch ist es möglich das Messgerät 2, insbesondere den Drehgeber mit einem Messrad, von dem zu messenden Material abzuheben, ohne dass eine Person das Messgerät dauerhaft anheben bzw. festhalten muss und auch der Anpressdruck auf das Material nicht verstellt wird. Der Rastbolzen 40 sitzt dabei in der Schwinge 4 und wird mit Hilfe einer Druckfeder in Richtung des Lagergehäuses 8 gedrückt. Zum Feststellen der Schwinge muss der Rastbolzen gegen die Federkraft der Druckfeder rausgezogen werden und über der Führung für den Rastbolzen 38 losgelassen werden. Die Druckfeder sorgt dafür, dass der Rastbolzen 40 sicher in der Führung gehalten wird.

Damit der Rastbolzen 40 die Schwinge 4 nicht versehentlich löst ist in Fig. 4 eine Sicherheitsvorrichtung 42 in Form eines seitlichen Stiftes 48 vorgesehen. Dieser Stift 48 am Rastbolzen 40 wird beim Feststellen der Schwinge 4 in eine seitliche Ausformung eingedreht, so dass der Rastbolzen 40 nicht mehr herausgezogen werden kann. Zum entsichern bzw. lösen der Schwinge 4 muss zunächst der Rastbolzen 40 gedreht werden, damit der Stift 48 aus der Ausformung gedreht wird und dann gegen die Federkraft aus der Führung 38 herausgezogen werden.

### Bezugszeichenliste

- 1: Federarm
- 2: Messgerät
- 4: Schwinge
- 6: Gelenkeinheit
- 8: Lagergehäuse
- 10: Grundplatte
- 12: Federelement
- 14: Montagewinkel
- 16: Bohrungen
- 18a,b: Stirnfläche des Lagergehäuses
- 20: Anzugsschraube
- 22a,b: Verzahnungsprofil
- 24: Längsstreben
- 26: Aussparungen
- 28: Schraube
- 30: Führungsausformung
- 32: Führungsnut
- 34: Führungsschacht
- 36: Andrückfeder
- 38: Führung für einen Rastbolzen
- 40: Rastbolzen
- 42: Sicherheitsvorrichtung
- 44: Lagerelement
- 46: Federarmachse
- 48: Stift

- x: Drehachse

## Patentansprüche

1. Federarm (1) zur Aufnahme eines Messgerätes (2) mit einer Schwinge (4), deren eines Ende zur Aufnahme des Messgerätes (2) ausgeformt ist und derem anderen Ende eine Gelenkeinheit (6) zugeordnet ist, wobei die Gelenkeinheit (6) eine ortsfeste Grundplatte (10) und ein im Montage- bzw. Einstellmodus gegenüber der Grundplatte (10) um eine Drehachse (x) senkrecht zur Grundplatte (10) drehbar gelagertes und an der Schwinge (4) angeordnetes Lagergehäuse (8) umfasst, **dadurch gekennzeichnet, dass** die Grundplatte (10) und das Lagergehäuse (8) an den jeweils zueinander ausgerichteten Stirnflächen (18a,b) der Grundplatte (10) bzw. des Lagergehäuses (8) in zumindest einem Abschnitt ein Verzahnungsprofil (22a,b) aufweisen.

2. Federarm (1) nach Anspruch 1, **dadurch gekennzeichnet, dass** die Bergkämme der Verzahnungsprofile (22a,b) von der Drehachse (x) aus radial angeordnet sind.

3. Federarm (1) nach einem der Ansprüche 1 oder 2, **dadurch gekennzeichnet, dass** die Verzahnungsprofile (22a,b) im Randbereich der Stirnflächen (18a,b) angeordnet sind.

4. Federarm (1) nach einem der Ansprüche 1 bis 3, **dadurch gekennzeichnet, dass** die Bergkämme und/oder die Täler der Verzahnungsprofile (22a,b) abgerundet sind.

5. Federarm (1) nach einem der Ansprüche 1 bis 4, **dadurch gekennzeichnet, dass** das Lagergehäuse (8) an der Manteloberfläche Ausformungen (24) aufweist, die parallel zur Drehachse (x) angeordnet sind.

6. Federarm (1) nach einem der Ansprüche 1 bis 5, **dadurch gekennzeichnet, dass** die Grundplatte (10) an der Stirnfläche (18b) eine Führungsausformung (30) umfasst und die Stirnfläche (18a) des Lagergehäuses (8) eine zur Führungsausformung (30) korrespondierende Führungsnut (32) aufweist.

7. Federarm (1) nach einem der Ansprüche 1 bis 6, **dadurch gekennzeichnet, dass** die Schwinge (4) gegenüber dem Lagergehäuse (8) um die Drehachse (x) in zumindest einem Kreissegment drehbar gelagert ist.

8. Federarm (1) nach einem der Ansprüche 7, **dadurch gekennzeichnet, dass** zum Feststellen der Schwinge (4) gegenüber dem Lagergehäuse (8) ein Rastbolzen(40) vorgesehen ist.

9. Federarm (1) nach einem der Ansprüche 1 bis 8, **dadurch gekennzeichnet, dass** die Schwinge (4) gegenüber dem Lagergehäuse (8) mittels eines Federelements (12) federnd gelagert ist.

## Claims

1. A spring arm (1) for accommodating a measuring instrument (2), having an oscillating crank (4), one end of which is designed for accommodating the measuring instrument (2) and to the other end of which an articulated unit (6) is associated, the articulated unit (6) comprising a stationary base plate (10) and a bearing housing (8) which is mounted so as to be rotatable relative to the base plate (10), in the assembly or adjustment mode, about an axis of rotation (x) normal to the base plate (10) and which is arranged on the oscillating crank (4), **characterized in that** the base plate (10) and the bearing housing (8) include, in at least one section, a toothed profile (22a, b) on the front faces (18a, b), which are aligned to each other, of the base plate (10) and of the bearing housing (8), respectively.

2. The spring arm (1) of claim 1, **characterized in that** the crests of the toothed profiles (22a, b) are arranged radially from the axis of rotation (x).

3. The spring arm (1) of any of claims 1 or 2, **characterized in that** the toothed profiles (22a, b) are arranged in the peripheral area of the front faces (18a, b).

4. The spring arm (1) of any of claims 1 to 3, **characterized in that** the crests and/or valleys of the toothed profiles (22a, b) are rounded.

5. The spring arm (1) of any of claims 1 to 4, **characterized in that** the bearing housing (8) includes, on the surface of its casing, ribs (24) arranged in paralled to the axis of rotation (x).

6. The spring arm (1) of any of claims 1 to 5, **characterized in that** the base plate (10) includes on its front face (18b) a guiding rib (30) and the front face (18b) of the bearing housing (8) includes a guiding groove (32) corresponding to the guiding rib (30).

7. The spring arm (1) of any of claims 1 to 6, **characterized in that** the oscillating crank (4) is mounted, in at least one circular segment, so as to be rotatable relative to the bearing housing (8) about the axis of rotation (x).

8. The spring arm (1) of any of claims 1 to 7, **characterized in that** a locking bolt (40) is provided for locking the oscillating crank (4) relative to the bearing housing (8).

9. The spring arm (1) of any of claims 1 to 8, **characterized in that** the oscillating crank (4) is mounted resiliently relative to the bearing housing (8) by means of a spring element (12).

## Revendications

1. Bras de ressort (1) pour recevoir un appareil de mesure (2), ayant une manivelle oscillante (4), l'un des bouts de laquelle étant conçu pour recevoir l'appareil de mesure (2) et une unité articulée (6) étant affectée à son autre bout, l'unité articulée (6) comprenant une plaque de base (10) stationnaire et un logement de palier (8) qui est monté à ce qu'il tourne, par rapport à la plaque de base (10), dans le mode d'assemblage ou dans le mode de réglage, autour d'un axe de rotation (x) perpendiculaire à la plaque de base (10), et qui est disposé sur la manivelle oscillante (4), **caractérisé en ce que** la plaque de base (10) et le logement de palier (8) comprennent, dans au moins une section, un profil denté (22a, b) sur les côtés frontaux (18a, b), alignés l'un sur l'autre, de la plaque de base (10) et du logement de palier (8), respectivement.

2. Bras de ressort (1) selon la revendication 1, **caractérisé en ce que** les crêtes des profils dentés (22a, b) sont disposées radialement de l'axe de rotation (x).

3. Bras de ressort (1) selon l'une quelconque des revendications 1 ou 2, **caractérisé en ce que** les profils dentés (22a, b) sont disposés dans la région périphérique des côtés frontaux (18a, b).

4. Bras de ressort (1) selon l'une quelconque des revendications 1 à 3, **caractérisé en ce que** les crêtes et/ou les vallées des profils dentés (22a, b) sont arrondies.

5. Bras de ressort (1) selon l'une quelconque des revendications 1 à 4, **caractérisé en ce que** le logement de palier (8) comprend, sur la surface de son enveloppe, des nervures (24) disposées parallèlement à l'axe de rotation (x).

6. Bras de ressort (1) selon l'une quelconque des revendications 1 à 5, **caractérisé en ce que** la plaque de base (10) comprend sur son côté frontal (18b) une nervure de guidage (30) et le côté frontal (18b) du logement de palier (8) comprend une rainure de guidage (32) correspondante à la nervure de guidage (30).

7. Bras de ressort (1) selon l'une quelconque des revendications 1 à 6, **caractérisé en ce que** la manivelle oscillante (4) est montée, dans au moins un segment de cercle, à ce qu'elle tourne, par rapport au logement de palier (8), autour de l'axe de rotation (x).

8. Bras de ressort (1) selon l'une quelconque des revendications 1 à 7, **caractérisé en ce qu'**un boulon d'arrêt (40) est prévu pour arrêter la manivelle oscillante (4) par rapport au logement de palier (8).

9. Bras de ressort (1) selon l'une quelconque des revendications 1 à 8, **caractérisé en ce que** la manivelle oscillante (4) est montée de façon élastique par rapport au logement de palier (8) au moyen d'un élément de ressort (12).
